# EUROPÄISCHE PATENTSCHRIFT

(11) **EP 3 428 011 B1**
(45) Veröffentlichungstag und Bekanntmachung des Hinweises auf die Patenterteilung: **29.01.2020**
(21) Anmeldenummer: 18182377.4
(22) Anmeldetag: 09.07.2018
(51) Int. Cl.: B60P 1/16

(54) **BAUMASCHINE**
CONSTRUCTION MACHINE
ENGIN DE CHANTIER

(30) Priorität: 11.07.2017 DE 102017115537
(43) Veröffentlichungstag der Anmeldung: 16.01.2019
(73) Patentinhaber: Liebherr-Hydraulikbagger GmbH, 88457 Kirchdorf (DE)
(72) Erfinder: Meitinger, Bernhard, 87740 Buxheim (DE); Hilsenbeck, Volker, 88299 Leutkirch (DE)
(74) Vertreter: Laufhütte, Dieter

(56) Entgegenhaltungen:
- DE-A1- 3 709 504
- DE-A1-102004 033 315
- US-A1- 2015 051 798
- US-A1- 2017 113 699

## Beschreibung

Die Erfindung betrifft eine Baumaschine mit wenigstens einer Materialaufnahme, die mittels wenigstens eines hydraulischen Aktuators zur Entladung verstellbar ist, wobei der notwendige Speisedruck zur Aktuatorbetätigung durch einen Hydraulickreislauf der Baumaschine bereitstellbar ist und der Speisedruck mittels wenigstens einer Druckbegrenzungsvorrichtung auf einen Grenzdruck begrenzbar ist.

Ein Beispiel für gattungsgemäße Baumaschinen sind Muldenkipper, insbesondere knickgelenkte Muldenkipper. Diese dienen zur Erdbewegung und weisen als Materialaufnahme eine Ladefläche in Form einer sogenanten Mulde auf. Die zur Lastaufnahme vorgesehene Mulde ist über ein oder mehrere Hydraulikzylinder kippbar am Fahrgestell gelagert, um die aufgenommene Last durch das Aufstellen der Mulde abzuladen. Die notwendige Energie für die Kippzylinder wird durch die interne Hydraulik der Maschine bereitgestellt.

Um eine Überlastung einzelner Hydraulikkomponenten zu vermeiden, umfasst die Hydraulik üblicherweise wenigstens eine Druckbegrenzungsvorrichtung, die den Systemdruck auf ein maximales Druckniveau begrenzt. Das vordefinierte maximale Druckniveau bestimmt die maximal mögliche Kippkraft der Aktuatoren zum Aufstellen der Mulde. Die Dimensionierung des maximalen Druckniveaus richtet sich in der Praxis nach der notwendigen Kippkraft für das Aufstellen der Mulde bei einer zulässigen Maximalbeladung. Dieser maximal zulässige Kippdruck wird demzufolge am Steuerventil dauerhaft auf einen vordefinierten festen Wert eingestellt und ist unabhängig vom aktuellen Betriebszustand der Maschine.

Problematisch kann die vorgenannte Lösung jedoch bei einer ungünstigen Gewichtsverteilung der aufgenommenen Last auf der Mulde sein, denn in diesem Fall kann gegebenenfalls eine höhere Kippkraft zum Aufstellen der Mulde notwendig sein, die sich jedoch aufgrund der Druckbegrenzung nicht erreichen lässt. In diesem Fall kann die Hydraulik die benötigte Leistung nicht aufbringen, selbst dann nicht, wenn die aktuelle Beladung der Mulde die zulässige Obergrenze nicht überschreitet.

Gleiches gilt für den regelmäßig auftretenden Praxisfall, bei dem der Muldenkipper rückwärts an eine Rampe zum Abladen des aufgeladenen Materials fährt. Aufgrund der Rampenneigung kommt es zu einer Schiefstellung der Baumaschine und einer dadurch bedingten Schwerpunktverlagerung des Ladegutes. Dies kann ebenso zu einer Zunahme des notwendigen Kippdruckes für den Abladevorgang führen. Unter Umständen muss dann die Maschinenposition bzw. die Fahrzeugneigung geändert werden, um ein Abladen der Mulde möglich zu machen.

Das europäische Patent EP 2 836 394 greift diese Problematik auf und sieht zur Problemlösung ein Umschalten des regulären maximalen Kippdruckes auf einen zweiten höheren Maximaldruck vor, wenn ein vordefinierter Neigungswinkel der Maschine überschritten wird. Zwar wird hierdurch ein Abladen der Materialaufnahme mit erhöhtem Kippdruck ermöglicht, allerdings ist auch diese Lösung mit nur zwei Grenzwerten wenig flexibel. Auch kann die Lehre dieses Patentes das bei unvorteilhafter Lastverteilung auftretende Problem nicht lösen.

Die vorbeschriebene Problematik kann in der Praxis auch bei konventionellen Baggern auftreten, da auch hier ein Grenzwert für den Hydraulikdruck zur Betätigung einzelner Aktuatoren zum Anheben der Baggerschaufel notwendig ist, weshalb unter gewissen Umständen eine Betätigung der Baggerschaufel, des Greifers oder eines anderen Anbauwerkzeuges oder des Baggerarms auch bei zulässiger Beladung nicht möglich sein kann. Somit stellen Bagger auch gattungsgemäße Baumaschinen im Rahmen der Erfindung dar, bei denen die Materialaufnahme durch die Baggerschaufel,den Greifer oder ähnliches gebildet ist.

Die vorliegende Aufgabe besteht nunmehr darin, eine alternative Lösung für die oben gezeichnete Problematik vorzuschlagen, insbesondere für den Einsatz bei Muldenkippern bzw. Baggern.

Gelöst wird diese Aufgabe durch eine Baumaschine gemäß den Merkmalen des Anspruchs 1. Vorteilhafte Ausgestaltungen der Baumaschine sind Gegenstand der abhängigen Ansprüche.

Erfindungsgemäß wird vorgeschlagen, eine gattungsgemäße Baumaschine um ein Wiegesystem zu ergänzen, um dadurch den aktuellen Beladungszustand, d.h. die Beladungslast der Materialaufnahme der Baumaschine, erfassen zu können. Mittels einer Steuerung für den Hydraulikkreislauf soll dann in Abhängigkeit der ermittelten Beladungslast der Grenzdruck der Druckbegrenzungsvorrichtung für die Ansteuerung der Aktuatoren angepasst werden.

Im Gegensatz zum Stand der Technik wird nicht auf einen hardwareseitig festgelegten Maximaldruck zurückgegriffen, sondern stattdessen ein flexibler Wert in Abhängigkeit der tatsächlichen Beladung der Baumaschine gewählt. Die flexible Anpassung des Grenzdruckes stellt sicher, dass ein Betätigung der Aktuatoren und ein Entladen der Baumaschine auch dann möglich ist, wenn die Materialaufnahme zwar mit der maximal zulässigen Last beladen ist, aufgrund einer unvorteilhaften Ladungsverteilung und/oder nachteiligen Fahrzeugneigung eine höhere Druckkraft zur Betätigung der Materialaufnahme notwendig ist.

Als Baumaschine gilt beispielsweise ein Muldenkipper, insbesondere ein knickgelenkter Muldenkipper, dessen Mulde mittels wenigstens eines hydraulischen Aktuators, vorzugsweise mittels wenigstens eines Hydraulikzylinders, zur Entladung aufstellbar bzw. verkippbar ist. Ein entsprechendes Wiegesystem ist nahe an der Mulde des Muldenkippers installiert, um die durch die Mulde aufgenommene Last erfassen zu können.

Alternativ kann es sich bei der Baumaschine auch um einen Bagger handeln, dessen wenigstens ein Aktuator, bevorzugt Hydraulikzylinder, zur Betätigung der Baggerschaufel, des Greifer oder einem ähnlichen Anbauwerkzeug oder des Baggerarms dient. Auch hier kann ein entsprechendes Wiegesystem an der Schaufel etc. bzw. am Baggerarm installiert sein.

Gemäß vorteilhafter Ausgestaltung der Erfindung legt die Steuerung den Grenzdruck in Abhängigkeit der gemessenen Beladungslast auf einen zugeordneten Referenzgrenzdruck fest. Der Referenzgrenzdruck entspricht dabei vorzugsweise der notwendigen Druckkraft, die üblicherweise zur Betätigung einer im zulässigen Maximalbereich beladenen Materialaufnahme notwendig ist, wenn das Fahrzeug keine nennenswerte Neigung gegenüber der Horizontalen aufweist bzw. eine unproblematische Lastverteilung vorliegt.

Der Referenzgrenzdruck kann beispielsweise durch die Steuerung für den Einzelfall bestimmt bzw. berechnet werden. Alternativ kann in der Steuerung eine Datenbank mit hinterlegten Referenzgrenzdrücken integriert sein bzw. diese über eine Schnittstelle aus einer externen Datenbank entsprechende Einträge abrufen. Vorstellbar ist die Speicherung der Werte in Tabellenform, in der unterschiedlichen Beladungslasten entsprechende Referenzgrenzdrücke zuordnet sind.

Die verbaute Druckbegrenzungsvorrichtung des Hydraulikkreislaufs umfasst wenigstens ein mit der Speisedruckleitung des Aktuators verschaltetes Druckbegrenzungsventil. Ab einem bestimmten Druckniveau in der Speisedruckleitung öffnet das Druckbegrenzungsventil und entlastet den Eingang des Aktuators zur Niederdruckseite (Tank). Eine Überlastung einzelner Hydraulikkomponenten durch ein zu hohes Druckniveau wird verhindert. Idealerweise ist das Druckbegrenzungsventil vorsteuerbar, um den gewünschten Öffnungsdruck, d.h. den Grenzdruck, variabel durch die Steuerung mittelbar oder unmittelbar einstellen zu können. Die Vorsteuerung kann entweder elektrisch oder hydraulisch erfolgen. Gemäß bevorzugter Ausgestaltung ist die Steuerung über ein proportionales Regelventil mit der Vorsteuerung des Druckbegrenzungsventils verbunden, wodurch bevorzugt eine stufenlose Anpassung des Öffnungsdruckes und somit des Grenzdruckes möglich ist.

Unter bestimmten Umständen, bspw. bei entsprechender Maschinenneigung oder Lastverteilung auf der Materialaufnahme, kann der von der Steuerung in Abhängigkeit der ermittelten Beladungslast eingestellte Grenzdruck der Druckbegrenzungsvorrichtung zunächst nicht ausreichen, um ein ordnungsgemäßes Verstellen der Materialaufnahme zu ermöglichen. Diese kann auch dann der Fall sein, wenn die Beladungslast die zulässige Maximallast nicht überschreitet.

Eine nicht ordnungsgemäße Verstellung der Materialaufnahme kann dann vorliegen, wenn bspw. die erreichte Ist-Verstellgeschwindigkeit der Materialaufnahme unter einer gewünschten Soll-Verstellgeschwindigkeit der Materialaufnahme bleibt. Bevorzugt ist aus diesem Grund eine geeignete Sensorik zur Erfassung der erzielten Ist-Verstellgeschwindigkeit vorgesehen, deren Messwerte der Steuerung zur Verfügung gestellt werden. Die Programmierung der Steuerung führt einen ständigen Abgleich der Ist-Geschwindigkeit mit der Soll-Geschwindigkeit aus. Bei Unterschreitung der gewünschten Soll-Verstellgeschwindigkeit veranlasst die Steuerung bevorzugt eine Anpassung bzw. Erhöhung des vormals eingestellten Grenzdruckes. Eine Erhöhung des eingestellten Grenzdruckes ist allerdings nur dann zu veranlassen, wenn die ermittelte Beladungslast unterhalb einer zulässigen maximalen Beladungslast der Baumaschine verbleibt. Dies ist notwendig, um ein missbräuliches Überschreiten der maximalen Beladungslast zu verhindern.

Eine Erhöhung des erhöhten Grenzdruckes durch die Steuerung kann auch dann angebracht sein, wenn der aktuelle Speisedruck, d.h. der aktuelle Grenzdruck, nicht ausreicht, um die Materialaufnahme zum Entladen zu verstellen. Durch eine angemessene Erhöhung des Grenzdruckes kann dann sichergestellt werden, dass die Verstellung der Materialaufnahme dennoch erreicht werden kann. Auch in diesem Fall sollte eine Erhöhung des Grenzdruckes nur dann freigegeben werden, wenn die ermittelte Beladungslast unterhalb der zulässigen maximalen Beladungslast liegt.

Gemäß einer weiteren vorteilhaften Ausgestaltung der Erfindung kann die Baumaschine mit wenigstens einem Neigungssensor zur Erfassung der Fahrzeugneigung gegenüber der Horizontalen ausgestattet sein. Die Messwerte des Neigungssensors werden ebenfalls der Steuerung mitgeteilt, die diese bei der Anpassung des Grenzdruckes berücksichtigen kann. Dadurch kann in Abhängigkeit des Neigungswertes eine Anpassung des originären Referenzgrenzdruckes erfolgen.

Zum Schutz der beteiligten hydraulischen Komponenten ist es notwendig, einen festen maximalen Grenzdruck zu definieren, der auch durch die erfindungsgemäße Steuerung nicht überschritten werden darf. Zum weiteren Schutz vor einem Missbrauch der Baumaschine durch Überladung ist es sinnvoll, unterschiedliche maximale Grenzdrücke zu definieren, nämlich einen ersten maximalen Grenzdruck für den Fall, dass die ermittelte Beladungslast eine zulässige maximale Beladungslast der Baumaschine nicht überschreitet und einen zweiten maximalen Grenzdruck für den alternativen Fall, dass die ermittelte Beladungslast eine zulässige maximale Beladungslast der Baumaschine überschreitet. Sinnvollerweise ist der zweite maximale Grenzdruck geringer als der erste maximale Grenzdruck. Dadurch wird sichergestellt, dass eine temporäre Erhöhung des Grenzdruckes nur dann möglich ist, wenn die zulässige Beladungslast tatsächlich eingehalten wird.

Der Gegenstand der vorliegenden Erfindung betrifft ebenso ein Verfahren zum Betrieb einer Baumaschine für die Erdbewegung mit wenigstens einer Materialaufnahme. Die Materialaufnahme ist mittels wenigstens eines hydraulischen Aktuators verstellbar, wobei erfindungsgemäß der hydraulische Speisedruck des Aktuators auf einen Grenzdruck begrenzbar ist, der in Abhängigkeit der erfassten tatsächlichen Beladungslast der Materialaufnahme im Arbeitsbetrieb ermittelt wird.

Gemäß vorteilhafter Ausführung des Verfahrens wird der eingestellte Grenzdruck bis zu einem maximalen Grenzdruck erhöht, falls die tatsächliche Beladungslast eine zulässige Beladungslast nicht überschreitet und die resultierende Stellkraft für die Verstellbewegung der Materialaufnahme nicht ausreicht und/oder die resultierende Ist-Verstellgeschwindigkeit unter einer Soll-Verstellgeschwindigkeit liegt und/oder eine gewisse Neigung des Fahrzeugs gegenüber der Horizontalen erkannt wird.

Gemäß weiterhin bevorzugter Ausgestaltung der Erfindung wird das Verfahren auf einer Baumaschine gemäß der vorliegenden Erfindung bzw. einer vorteilhaften Ausgestaltung der Erfindung ausgeführt. Dementsprechend ergeben sich für das erfindungsgemäße Verfahren dieselben Vorteile und Eigenschaften, wie Sie bereits vorstehend anhand der erfindungsgemäßen Baumaschine erläutert wurden. Auf eine wiederholende Beschreibung wird aus diesem Grund verzichtet.

Weitere Vorteile und Eigenschaften der Erfindung sollen im Folgenden anhand eines in den Zeichnungen dargestellten Ausführungsbeispiels näher erläutert werden. Es zeigen:
- Figur 1:: eine schematische Darstellung des erfindungsgemäßen Muldenkippers;
- Figur 2a:: ein Ablaufdiagramm des erfindungsgemäßen Verfahrens für einen bestimmten Anwendungsfalls;
- Figur 2b:: ein weiteres Ablaufdiagramm des erfindungsgemäßen Verfahrens für einen weiteren Anwendungsfall;
- Figur 2c:: ein weiteres Ablaufdiagramm des erfindungsgemäßen Verfahrens für einen dritten Anwendungsfall;
- Figur 3:: eine Diagrammdarstellung zur Verdeutlichung des Zusammenhang zwischen Kippkraft und Beladung und
- Figur 4:: ein Hydraulikschaltbild der erfindungsgemäßen Baumaschine.

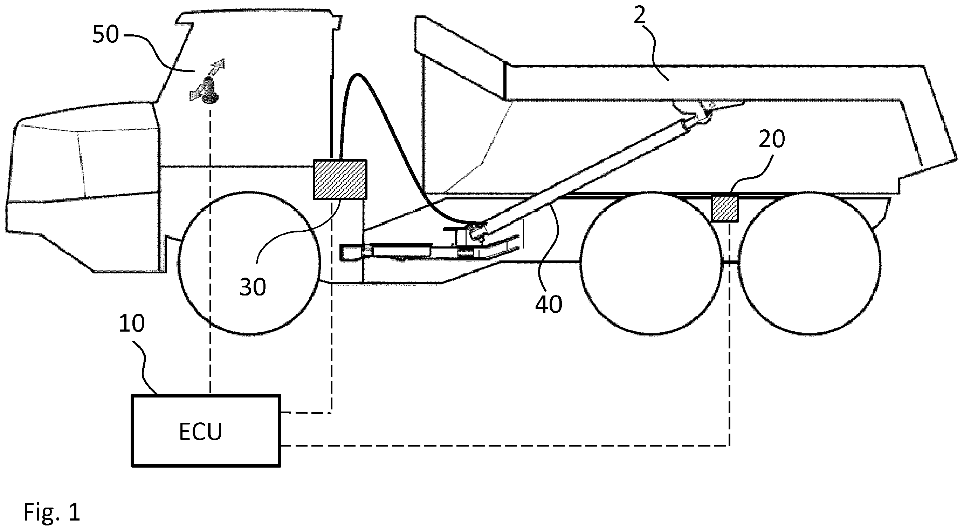

Figur 1 zeigt eine skizzierte Darstellung der erfindungsgemäßen Baumaschine in Form eines knickgelenkten Muldenkippers. Der Muldenkipper umfasst eine kippbar am Fahrgestell gelagerte Mulde 2, die mittels des hydraulischen Antriebs in Form wenigstens eines Hydraulikzylinders 40 aufstellbar ist, um die aufgenommene Last abzukippen. Die Betätigung des hydraulischen Antriebs 40 erfolgt über einen Bedienhebel 50 innerhalb der Fahrerkabine des Muldenkippers.

Unterhalb der Mulde 2 ist ein Wiegesystem 20 installiert, das die aktuelle Beladungslast der Mulde erfasst und an die Fahrzeugsteuerung 10 ("ECU" = Engine Control Unit) weiterleitet. Diese erhält auch die Steuersignale des Bedienhebels 50. Ein Steuerausgang der ECU 10 steht mit der Hydrauliksteuerung 30 in Verbindung, mittels dieser einzelne Komponenten, wie Ventile, etc. des Hydraulikkreislaufes, ansteuerbar sind.

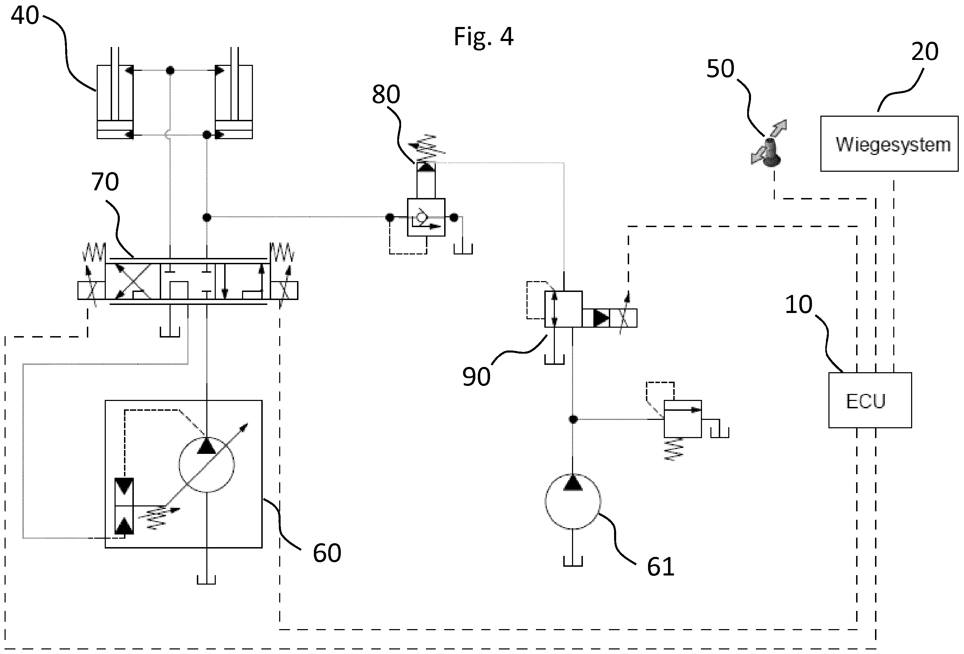

Ein Schaltdiagram der Hydraulik ist der Figur 4 zu entnehmen. Dargestellt sind die beiden Hydraulikzylinder 40 zur Betätigung der Mulde. Der notwendige Speisedruck für die Kolbenstangenbewegung wird durch die Verstellpumpe 60 bereitgestellt, die über das Wegeventil 70 mit den beiden Hydraulikantrieben 40 verschaltet ist. Über die drei Schaltzustände des Wegeventils 70 lassen sich die Zylinder 40 gemeinsam ein- oder ausfahren bzw. in der aktuellen Position anhalten. Die Hochdruckseite der Pumpe 60, d.h. die Hochdruckleitung zu den Zylindern 40 ist über ein Druckbegrenzungsventil 80 mit dem Hydrauliktank verbunden. Übersteigt das Druckniveau in der Hochdruckzuführung den Öffnungsdrucks des Druckbegrenzungsventils 80, wird die Leitung zum Tank hin entlastet.

Das Druckbegrenzungsventil 80 ist hydraulisch vorgesteuert, wobei der Steuerdruck am Steuereingang des Druckbegrenzungsventils 80 über das proportionale Druckregelventil 90 einstellbar ist, das eingangsseitig mit der Hydraulikpumpe 61 verbunden ist. Das Druckregelventil 90 ist elektrisch betätigbar.

Wie bereits zuvor erläutert, erhält die ECU 10 die Sensorsignal des Wiegesystems 20 sowie des Bedienhebels 50. Über Steuerausgänge ist die ECU 10 mit dem Wegeventil 70 zur Betätigung der Hydraulikzylinder 40 als auch mit dem Druckregelventil 90 zur Einstellung des Grenzdruckes des Druckbegrenzungsventils 80 verbunden. Die Ansteuerung erfolgt über die Hydrauliksteuerung 30, die im Schaltbild der Figur 4 zur besseren Übersicht nicht abgebildet wurde. Das Wegeventil 70 wird proportional zur Anforderung, die durch die Auslenkung des Bedienhebels 50 bestimmt ist, geöffnet. Die Regelpumpe 60 erzeugt durch das LS-Signal, das im Wegeventil 70 generiert wird, bedarfsgerecht die angeforderte Hydraulikmenge. Die Kippzylinder 40 heben die Mulde 40 mit der geforderten Soll-Kippgeschwindigkeit an.

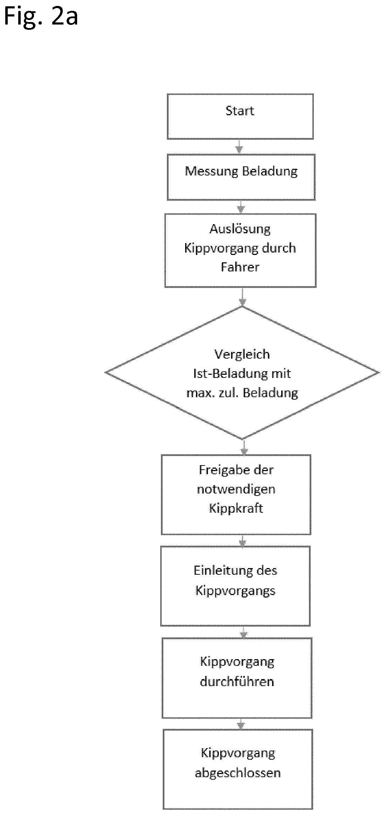

Im Arbeitsbetrieb wird die auf der Mulde 2 aufgenommene Ist-Last durch das Wiegesystem 20 erfasst und an die Steuerung 10 übermittelt. Nach Betätigung des Bedienhebels 50 vergleicht diese noch vor Ausführung des Abkippvorgangs die erfasste Ist-Last gegen einen definierten maximal zulässigen Lastwert. Für den Fall, dass die Ist-Last kleiner bzw. gleich dem maximal zulässigen Wert ist, wird von der Steuerung 10 das Signal an die hydraulische Steuerung 30 zur Anpassung des Kippdrucks weitergegeben. Die einzelnen auszuführenden Verfahrensschritte sollen nachfolgend anhand der Ablaufdiagramme der Figuren 2a-2c erläutert werden, die unterschiedliche Anwendungsfälle darstellen.

Figur 2a zeigt das Ablaufdiagramm für den Standardpraxisfall. Die Wiegeeinrichtung 20 erfasst permanent die aktuelle Beladung der Mulde 2. Nach Auslösen des Kippvorgangs durch den Fahrer mittels des Bedienelements 50 erfolgt ein Vergleich der gemessenen Ist-Beladung mit einer in der Steuerung 10 hinterlegten zulässigen Beladung. Ist die Ist-Beladung kleiner oder gleich der maximal zulässigen Beladung, ermittelt die Steuerung 10 die notwendige Kippkraft für die erfasste Beladung und stellt den Referenzgrenzdruck am Druckbegrenzungsventil 80 mittelbar durch Betätigung des Druckregelventils 90 ein. Dadurch wird die bestimmte notwendige Kippkraft zum Anheben der Mulde 2 freigegeben. Im Anschluss erfolgt die Einleitung des Kippvorgangs durch die hydraulische Steuereinrichtung 30 und der Kippvorgang wird durch Betätigung der Kippzylinder 40 ausgeführt, bis dieser vollständig abgeschlossen ist.

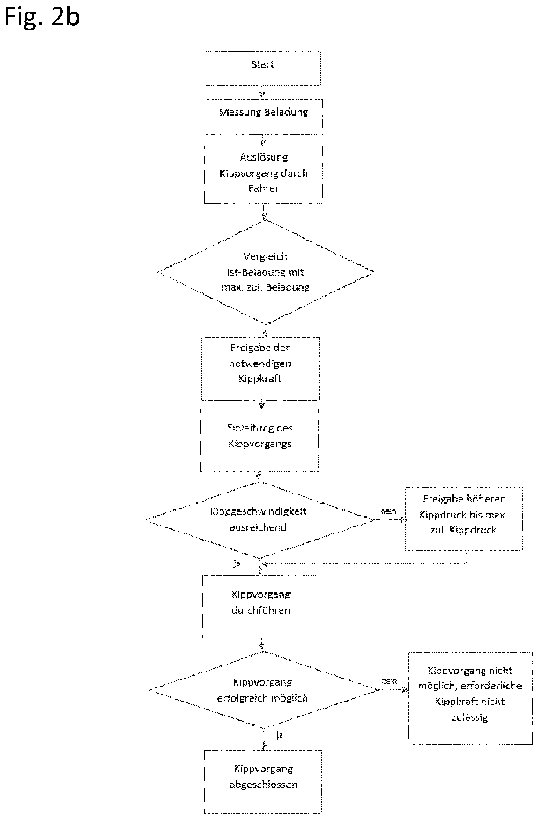

Figur 2b zeigt das Ablaufdiagramm für einen bestimmten Anwendungsfall, bei dem nach erfolgter Einstellung des Grenzdruckes des Druckbegrenzungsventils 80 die resultierende Kippgeschwindigkeit nicht einer gewünschten Soll-Geschwindigkeit entspricht. Auch hier wird ständig die aktuelle Beladung der Mulde 2 durch die Wiegeeinrichtung 20 erfasst. Nach Auslösen des Kippvorgangs durch den Fahrer mittels des Bedienelementes 50 erfolgt ein Vergleich der Ist-Beladung mit der hinterlegten maximalen zulässigen Beladung. Ähnlich dem Ausführungsbeispiel der Figur 2a erfolgt auch hier die Freigabe der notwendigen Kippkraft durch die Steuerung 10 und die Einleitung des Kippvorgangs durch die hydraulische Steuereinrichtung 30.

Während des Kippvorgangs wird jedoch geprüft, ob die erzielte Kippgeschwindigkeit, die mittels einer gesonderten Sensorik erfasst wird, einer vordefinierten Soll-Kippgeschwindigkeit der Mulde 2 entspricht. Ist dies der Fall, wird der Kippvorgang durch die Betätigung der Kippzylinder 40 bis zum Abschluss des Entladevorgangs ausgeführt. Liegt jedoch die aktuelle Kippgeschwindigkeit der Mulde 2 unterhalb der Soll-Kippgeschwindigkeit, erfolgt eine Erhöhung des Grenzdruckes des Druckbegrenzungsventils 80 durch die Steuerung 10, um dadurch eine höhere Kippkraft auf die Mulde 2 aufbringen zu können, bis die gewünschte Soll-Kippgeschwindigkeit erreicht wird.

Hierbei ist jedoch zu beachten, dass eine Erhöhung des Grenzdruckes des Druckbegrenzungsventils 80 nur bis zu einem vordefinierten ersten maximalen Kippdruck erfolgen kann, bei dem eine Überlastung einzelner Hydraulikkomponenten und deren Beschädigung vermieden wird.

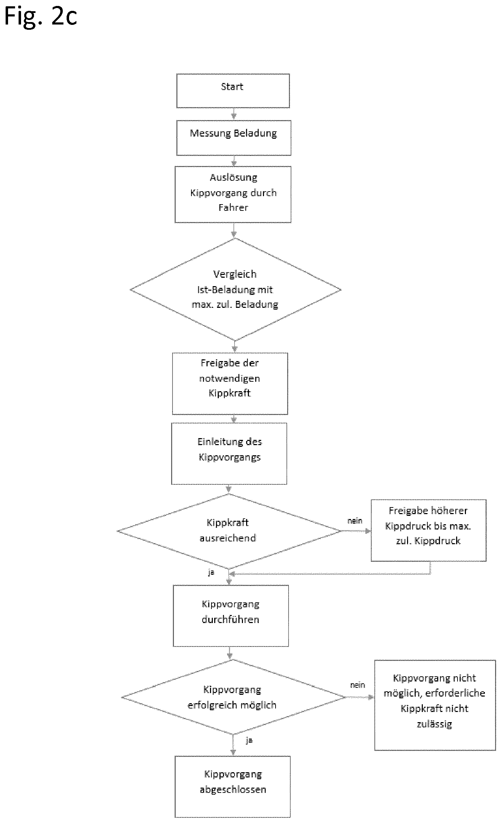

Figur 2c zeigt einen weiteren Anwendungsfall des erfindungsgemäßen Verfahrens. Auch hier erfolgt die Freigabe der notwendigen Kippkraft durch die Steuerung 10 und die Einleitung des Kippvorgangs durch die hydraulische Steuereinrichtung 30. Wird jedoch beim nachfolgenden Kippvorgang festgestellt, dass die eingestellte Kippkraft aufgrund des gewählten Grenzdruckes nicht ausreichend ist, um die Mulde entsprechend aufzustellen, wird durch die Steuerung 10 ein höherer Kippdruck durch Anhebung des Grenzdruckes des Druckbegrenzungsventils 80 freigegeben, dies jedoch nur bis zu einem vordefinierten ersten maximalen Kippdruck. Ist eine Erhöhung soweit möglich, dass die Aktuatoren 40 die Mulde 2 entsprechend aufstellen können, wird der Kippvorgang bis zur Entladung der Mulde 2 abgeschlossen. Andernfalls wird der Vorgang abgebrochen und eine Mitteilung an den Fahrer gegeben, dass die erforderliche Kippkraft nicht zulässig ist.

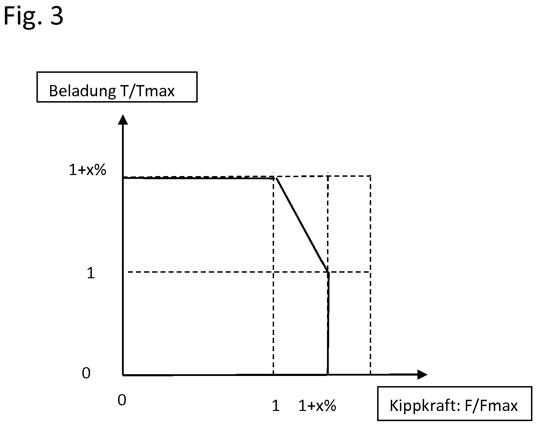

Figur 3 soll kurz den Zusammenhang zwischen der Beladung der Mulde 2 und der notwendigen Kippkraft darstellen. In Abhängigkeit des Ist-Beladungszustandes wird eine notwendige Soll-Kippkraft ermittelt und freigegeben, jedoch nur bis zu einer ersten maximalen Kippkraft. Wird die maximal zulässige Beladung überschritten, so wird die Kippkraft auf eine vordefinierte zweite maximale Kippkraft eingestellt.

## Patentansprüche

1. Baumaschine mit wenigstens einer Materialaufnahme, die mittels wenigstens eines hydraulischen Aktuators (40) zur Entladung verstellbar ist, wobei der notwendige Speisedruck zur Aktuatorbetätigung durch einen Hydraulikkreislauf der Baumaschine bereitstellbar ist und der Speisedruck mittels wenigstens einer Druckbegrenzungsvorrichtung auf einen Grenzdruck begrenzbar ist, wobei
die Baumaschine ein Wiegesystem (20) zur Ermittlung der aktuellen Beladungslast der Materialaufnahme (2) umfasst und eine Steuerung für den Hydraulikkreislauf vorgesehen ist, die in Abhängigkeit der ermittelten Beladungslast den Grenzdruck der Druckbegrenzungsvorrichtung (80) anpasst,
**dadurch gekennzeichnet,**
**dass** die Druckbegrenzungsvorrichtung wenigstens ein mit der Speisedruckleitung des Aktuators verschaltetes vorsteuerbares Druckbegrenzungsventil (80), dessen Öffnungsdruck elektrisch und/oder hydraulisch durch die Steuerung (10) auf den jeweiligen Grenzdruck einstellbar ist.

2. Baumaschine nach Anspruch 1, **dadurch gekennzeichnet, dass** die Steuerung (10) den Grenzdruck in Abhängigkeit der Beladungslast auf einen zugeordneten Referenzgrenzdruck anpasst, wobei der Referenzgrenzdruck innerhalb der Steuerung hinterlegt ist und/oder durch diese berechenbar ist.

3. Baumaschine nach einem der vorhergehenden Ansprüche, **dadurch gekennzeichnet, dass** die Ist-Verstellgeschwindigkeit der Materialaufnahme (2) mittels Sensorik durch die Steuerung (10) erfassbar ist, wobei die Steuerung derart konfiguriert ist, so dass diese eine Erhöhung des eingestellten Grenzdruckes veranlasst, wenn die ermittelte Beladungslast eine zulässige maximale Beladungslast der Baumaschine nicht überschreitet und die ermittelte Ist-Verstellgeschwindigkeit der Materialaufnahme (2) unterhalb einer SollVerstellgeschwindigkeit bleibt.

4. Baumaschine nach einem der vorhergehenden Ansprüche, **dadurch gekennzeichnet, dass** die Steuerung derart ausgestaltet ist, so dass diese eine Erhöhung des eingestellten Grenzdruckes veranlasst, wenn die ermittelte Beladungslast eine zulässige maximale Beladungslast der Baumaschine nicht überschreitet und der aktuelle Speisedruck nicht ausreicht, die Materialaufnahme (2) zum Entladen zu verstellen.

5. Baumaschine nach einem der vorhergehenden Ansprüche, **dadurch gekennzeichnet, dass** wenigstens ein Neigungssensor vorgesehen ist und die Steuerung (10) bei der Anpassung bzw. Einstellung des Grenzdruckes die erfasste Fahrzeugneigung berücksichtigt, insbesondere wird eine Erhöhung des Grenzdruckes veranlasst, wenn die ermittelte Beladungslast eine zulässige maximale Beladungslast der Baumaschine nicht überschreitet und eine gewisse Neigung der Baumaschine gegenüber der Horizontalen festgestellt wird.

6. Baumaschine nach einem der vorhergehenden Ansprüche, **dadurch gekennzeichnet, dass** die Steuerung (10) derart ausgestaltet ist, so dass der Grenzdruck bis zu einem ersten maximalen Grenzdruck einstellbar bzw. erhöhbar ist, wenn die ermittelte Beladungslast eine zulässige maximale Beladungslast der Baumaschine nicht überschreitet, und der Grenzdruck bis zu einem zweiten maximalen Grenzdruck einstellbar ist, wenn die ermittelte Beladungslast eine zulässige maximale Beladungslast der Baumaschine überschreitet.

7. Baumaschine nach einem der vorhergehenden Ansprüche, **dadurch gekennzeichnet, dass** die Baumaschine ein Muldenkipper, insbesondere ein knickgelenkter Muldenkipper ist, und der wenigstens eine Aktuator zu Verstellung der Mulde dient, wobei das Wiegesystem die Beladungslast der Mulde erfasst.

8. Verfahren zum Betrieb einer Baumaschine für die Erdbewegung gemäß einem der vorhergehenden Ansprüche, mit wenigstens einer Materialaufnahme, die mittels wenigstens eines hydraulischen Aktuators zur Entladung verstellbar ist, **dadurch gekennzeichnet, dass** der hydraulische Speisedruck des Aktuators auf einen Grenzdruck begrenzbar ist, der in Abhängigkeit der erfassten tatsächlichen Beladungslast der Materialaufnahme ermittelt wird.

9. Verfahren nach Anspruch 8, **dadurch gekennzeichnet, dass** der eingestellte Grenzdruck bis zu einem maximalen Grenzdruck erhöht werden kann, falls die tatsächliche Beladungslast eine zulässige Beladungslast nicht überschreitet und die resultierende Stellkraft für die Verstellbewegung der Materialaufnahme (2) nicht ausreicht und/oder die resultierende Verstellgeschwindigkeit unter einer Sollverstellgeschwindigkeit liegt und/oder eine gewisse Neigung des Fahrzeuges gegenüber der Horizontalen erkannt wird.

## Claims

1. A construction machine having at least one material receiver that is adjustable by means of at least one hydraulic actuator (40) for unloading, with the required feed pressure for the actuator actuation being able to be provided by a hydraulic circuit of the construction machine and with the feed pressure being able to be limited to a limit pressure by means of at least one pressure limiting device, wherein the construction machine comprises a weighing system (20) for determining the current load weight of the material receiver (2); and a control for the hydraulic circuit is provided that adapts the limit pressure of the pressure limiting device (80) in dependence on the determined load weight,
**characterized in that**
the pressure limiting device comprises at least one precontrollable pressure relief valve (80) interconnected to the feed pressure line of the actuator whose opening pressure can be electrically and/or hydraulically set to the respective limit pressure by the control (10).

2. A construction machine in accordance with claim 1, **characterized in that** the control (10) adapts the limit pressure in dependence on the load weight to an associated reference limit pressure, with the reference limit pressure being stored within the control and/or being able to be calculated by it.

3. A construction machine in accordance with one of the preceding claims, **characterized in that** the actual adjustment speed of the material receiver (2) can be detected by the control (10) by means of a sensor system, with the control being configured such that it initiates an increase of the set limit pressure when the determined load weight does not exceed a permitted maximum load weight of the construction machine and the determined actual adjustment speed of the material receiver (2) remains below a desired adjustment speed.

4. A construction machine in accordance with one of the preceding claims, **characterized in that** the control is adapted such that it initiates an increase of the set limit pressure when the determined load weight does not exceed a permitted maximum load weight of the construction machine and the current feed pressure is not sufficient to adjust the material receiver (2) for unloading.

5. A construction machine in accordance with one of the preceding claims, **characterized in that** at least one inclination sensor is provided and the control (10) takes account of the detected vehicle inclination on the adaptation or setting of the limit pressure; and **in that** an increase in the limit pressure is in particular initiated when the determined load weight does not exceed a permitted maximum load weight of the construction machine and a certain inclination of the construction machine with respect to the horizontal is determined.

6. A construction machine in accordance with one of the preceding claims, **characterized in that** the control (10) is adapted such that the limit pressure can be set or increased up to a first maximum limit pressure when the determined load weight does not exceed a permitted maximum load weight of the construction machine and the limit pressure can be set up to a second maximum limit pressure when the determined load weight exceeds a permitted maximum load weight of the construction machine.

7. A construction machine in accordance with one of the preceding claims, **characterized in that** the construction machine is a dump truck, in particular an articulated dump truck; and **in that** the at least one actuator serves the adjustment of the bed, with the weighing system detecting the load weight of the bed.

8. A method of operating a construction machine for earthmoving, preferably in accordance with one of the preceding claims, comprising at least one material receiver that is adjustable by means of at least one hydraulic actuator for unloading, **characterized in that** the hydraulic feed pressure of the actuator can be limited to a limit pressure that is determined in dependence on the detected actual load weight of the material receiver.

9. A method in accordance with claim 8, **characterized in that** the set limit pressure can be increased up to a maximum limit pressure if the actual load weight does not exceed a permitted load weight and the resulting adjustment force for the adjustment movement of the material receiver (2) is not sufficient and/or the resulting adjustment speed is below a nominal adjustment speed and/or a certain inclination of the vehicle with respect to the horizontal is recognized.

## Revendications

1. Engin de chantier comprenant au moins un élément de réception de matériaux, qui peut être déplacé en vue du déchargement au moyen d'au moins un actionneur hydraulique (40), la pression d'alimentation nécessaire à l'actionnement de l'actionneur pouvant être fournie par un circuit hydraulique de l'engin de chantier et la pression d'alimentation pouvant être limitée à une pression limite au moyen d'au moins un dispositif de limitation de pression,
l'engin de chantier comprenant un système de pesage (20) pour déterminer le poids de chargement actuel de l'élément de réception de matériaux (2) et un dispositif de commande pour le circuit hydraulique étant prévu, qui adapte la pression limite du dispositif de limitation de pression (80) en fonction du poids de chargement déterminé, **caractérisé en ce que**
le dispositif de limitation de pression comprend au moins une soupape de limitation de pression (80) à commande pilote raccordée au conduit de pression d'alimentation de l'actionneur, dont la pression d'ouverture peut être réglée de manière électrique et/ou hydraulique sur la pression limite respective par le dispositif de commande (10).

2. Engin de chantier selon la revendication 1, **caractérisé en ce que** le dispositif de commande (10) adapte la pression limite à une pression limite de référence associée en fonction du poids de chargement, la pression limite de référence étant enregistrée dans le dispositif de commande et/ou pouvant être calculée par celui-ci.

3. Engin de chantier selon l'une des revendications précédentes, **caractérisé en ce que** la vitesse de déplacement réelle de l'élément de réception de matériaux (2) peut être détectée par le dispositif de commande (10) au moyen d'un système de capteurs, le dispositif de commande étant configuré de manière à provoquer une augmentation de la pression limite réglée quand le poids de chargement déterminé ne dépasse pas un poids de chargement maximal admissible de l'engin de chantier et que la vitesse de déplacement réelle déterminée de l'élément de réception de matériaux (2) reste inférieure à une vitesse de déplacement théorique.

4. Engin de chantier selon l'une des revendications précédentes, **caractérisé en ce que** le dispositif de commande est conçu de manière à provoquer une augmentation de la pression limite réglée quand le poids de chargement déterminé ne dépasse pas un poids de chargement maximal admissible de l'engin de chantier et que la pression d'alimentation actuelle n'est pas suffisante pour déplacer l'élément de réception de matériaux (2) en vue du déchargement.

5. Engin de chantier selon l'une des revendications précédentes, **caractérisé en ce qu'**au moins un capteur d'inclinaison est prévu et le dispositif de commande (10) prend en compte, lors de l'adaptation ou du réglage de la pression limite, l'inclinaison détectée du véhicule, une augmentation de la pression limite étant en particulier provoquée quand le poids de chargement déterminé ne dépasse pas un poids de chargement maximal admissible de l'engin de chantier et qu'une certaine inclinaison de l'engin de chantier par rapport à l'horizontale est constatée.

6. Engin de chantier selon l'une des revendications précédentes, **caractérisé en ce que** le dispositif de commande (10) est conçu de telle manière que la pression limite peut être réglée ou augmentée jusqu'à une première pression limite maximale quand le poids de chargement déterminé ne dépasse pas un poids de chargement maximal admissible de l'engin de chantier et la pression limite peut être réglée jusqu'à une seconde pression limite maximale quand le poids de chargement déterminé dépasse un poids de chargement maximal admissible de l'engin de chantier.

7. Engin de chantier selon l'une des revendications précédentes, **caractérisé en ce que** l'engin de chantier est un tombereau, en particulier un tombereau à direction pivotante au centre, et l'au moins un actionneur sert à déplacer la benne, le système de pesage détectant le poids de chargement de la benne.

8. Procédé de fonctionnement d'un engin de chantier pour le terrassement selon l'une des revendications précédentes, comprenant au moins un élément de réception de matériaux, qui peut être déplacé en vue du déchargement au moyen d'au moins un actionneur hydraulique, **caractérisé en ce que** la pression d'alimentation hydraulique de l'actionneur peut être limitée à une pression limite, qui est déterminée en fonction du poids de chargement réel détecté de l'élément de réception de matériaux.

9. Procédé selon la revendication 8, **caractérisé en ce que** la pression limite réglée peut être augmentée jusqu'à une pression limite maximale si le poids de chargement réel ne dépasse pas un poids de chargement admissible et que la puissance de réglage résultante ne suffit pas pour le mouvement de déplacement de l'élément de réception de matériaux (2) et/ou que la vitesse de déplacement résultante est inférieure à une vitesse de déplacement théorique et/ou qu'une certaine inclinaison du véhicule par rapport à l'horizontale est détectée.
